# EUROPÄISCHE PATENTSCHRIFT

(11) **EP 3 907 383 B1**
(45) Veröffentlichungstag und Bekanntmachung des Hinweises auf die Patenterteilung: **03.05.2023**
(21) Anmeldenummer: 21166507.0
(22) Anmeldetag: 01.04.2021
(51) Int. Cl.: F01N 3/20, F01N 13/18

(54) **ABGASHEIZER FÜR EINE ABGASANLAGE EINER BRENNKRAFTMASCHINE**
EXHAUST GAS HEATER FOR AN EXHAUST GAS SYSTEM OF A COMBUSTION ENGINE
DISPOSITIF DE CHAUFFAGE À GAZ D'ÉCHAPPEMENT POUR UNE INSTALLATION DE GAZ D'ÉCHAPPEMENT D'UN MOTEUR À COMBUSTION INTERNE

(30) Priorität: 07.05.2020 DE 102020112391
(43) Veröffentlichungstag der Anmeldung: 10.11.2021
(73) Patentinhaber: Purem GmbH, 66539 Neunkirchen (DE)
(72) Erfinder: Tchamgoue, Herve, 72574 Bad Urach (DE); Walter, Christian, 70736 Fellbach (DE); Müller, Joachim, 72555 Metzingen (DE)
(74) Vertreter: Ruttensperger Lachnit Trossin Gomoll

(56) Entgegenhaltungen:
- EP-A1- 3 825 528
- CN-B- 104 969 004
- US-A- 5 053 603

## Beschreibung

Die vorliegende Erfindung betrifft einen Abgasheizer für eine Abgasanlage einer Brennkraftmaschine.

Aus der nachveröffentlichten europäischen Patentanmeldung EP 3 825 528 A1 ist ein Abgasheizer bekannt, welcher einen aus Metallmaterial aufgebauten scheibenartigen Träger mit einem bezüglich einer Heizer-Längsachse radial außen angeordneten Außenumfangsbereich und einem bezüglich des Außenumfangsbereichs axial versetzten Zentralbereich aufweist, so dass der scheibenartige Träger grundsätzlich eine konische Struktur aufweist. An einer in Richtung stromaufwärts orientierten ersten axialen Seite des scheibenartigen Trägers ist ein spiralartig gewundener Heizbereich eines Heizleiters angeordnet. Durch mehrere kammartig ausgebildete Halteorgane ist der Heizleiter mit seinem Heizbereich an der ersten axialen Seite des scheibenartigen Trägers festgelegt. Dazu umgreifen die kammartigen Halteorgane mit jeweiligen Halteabschnitten den Heizbereich des Heizleiters an dessen von dem Träger abgewandten Seite. Zwischen radial gestaffelt liegende Windungsbereiche des Heizbereichs eingreifende Befestigungsabschnitte der Halteorgane sind durch Materialschluss an der ersten axialen Seite des scheibenartigen Trägers festgelegt.

Die WO 2014/100118 A1 offenbart einen Abgasheizer gemäß dem Oberbegriff des Anspruchs 1, bei welchem ein in spiralartig gewundener Form bereitgestellter Heizbereich eines Heizleiters an einer axialen Seite eines grundsätzlich scheibenartigen und eine Mehrzahl von im Wesentlichen radial sich erstreckenden Stegen umfassenden Trägers durch in Zuordnung zu den Stegen vorgesehene Halteorgane gehalten ist. Die Halteorgane sind mit wellenartiger Struktur ausgebildet und umgreifen mit Halteabschnitte bereitstellenden ersten Wellenbauchbereichen die radial gestaffelt liegenden Windungsabschnitte des Heizleiters. Mit zwischen den ersten Wellenbauchbereichen liegenden zweiten Wellenbauchbereichen stellen die Halteorgane Befestigungsabschnitte bereit, welche an den jeweils zugeordneten Stegen festgelegt sind.

Die US 5 053 603 A offenbart einen Abgasheizer, bei welchem ein Heizleiter mit einem spiralartig gewundenen Heizbereich an einer axialen Seite eines scheibenartigen Trägers angeordnet ist, der eine Mehrzahl von im Wesentlichen radial sich erstreckenden, durch U-förmige Drahtelemente bereitgestellten Stegen umfasst. An diesen ist der Heizleiter durch jeweilige mit wellenartiger Struktur bereitgestellte Halteorgane festgelegt. Mit Halteabschnitte bereitstellenden ersten Wellenbauchbereichen umgreifen die Halteorgane die Windungsabschnitte des Heizleiters. Mit Befestigungsabschnitte bereitstellenden zweiten Wellenbauchbereichen hintergreifen die Halteorgane die durch die U-förmigen Drahtelemente bereitgestellten Stege und sind in diesem Bereich zum Bereitstellen eines Formschlusses umgebogen.

Es ist die Aufgabe der vorliegenden Erfindung, einen Abgasheizer für eine Abgasanlage einer Brennkraftmaschine bereitzustellen, bei welchem ein Heizleiter an einem Träger in einfacher Art und Weise stabil festgelegt werden kann.

Erfindungsgemäß wird diese Aufgabe gelöst durch einen Abgasheizer für eine Abgasanlage einer Brennkraftmaschine gemäß Anspruch 1, umfassend:
- einen scheibenartigen Träger mit einem bezüglich einer Heizer-Längsachse radial außen angeordneten Außenumfangsbereich und einem radial innen angeordneten Zentralbereich,
- einen Heizleiter mit einem an einer ersten axialen Seite des Trägers angeordneten Heizbereich,
- wenigstens ein Halteorgan zum Halten des Heizleiters an dem Träger,
wobei das Halteorgan wenigstens einen den Heizleiter in seinem Heizbereich umgreifenden Halteabschnitt und wenigstens einen in eine Befestigungsöffnung in dem Träger eingreifenden und an dem Träger festgelegten Befestigungsabschnitt umfasst.

Die stabile Befestigungswirkung wird dadurch unterstützt, dass wenigstens ein Halteorgan eine Mehrzahl von alternierend aufeinanderfolgenden Halteabschnitten und Befestigungsabschnitten umfasst, wobei das wenigstens eine Halteorgan wellenartig ausgebildet ist mit alternierend aufeinanderfolgenden ersten Wellenbauchbereichen und zweiten Wellenbauchbereichen, wobei die ersten Wellenbauchbereiche Halteabschnitte bilden und die zweiten Wellenbauchbereiche Befestigungsabschnitte bilden.

Für eine auch unter starken thermischen und dynamischen Belastungen stabile Befestigung ist wenigstens ein Halteorgan mit wenigstens einem Befestigungsabschnitt an einer zweiten axialen Seite des Trägers durch Materialschluss, vorzugsweise Verschweißen, an dem Träger festgelegt.

Hierzu ist wenigstens ein in eine Befestigungsöffnung des Trägers eingreifender zweiter Wellenbauchbereich in seinem an der zweiten axialen Seite des Trägers hervorstehenden Längenabschnitt durch Materialschluss an dem Träger festgelegt ist.

Bei dem erfindungsgemäßen Abgasheizer greifen mehrere Befestigungsabschnitte in jeweilige Befestigungsöffnungen in dem Träger ein, so dass von einer zweiten axialen Seite des Trägers der Zugriff auf die Befestigungsabschnitte besteht und somit diese in einfacher Weise am Träger festgelegt werden können bzw. die Befestigungsabschnitte an der zweiten axialen Seite des Trägers mit diesem in Befestigungswechselwirkung treten können.

Um bei einer eine große Heizleistung ermöglichenden Ausgestaltung des Heizleiters diesen stabil am Träger fixieren zu können, wird vorgeschlagen, dass der Heizleiter in seinem Heizbereich spiralartig gewunden ist und eine Mehrzahl von zueinander radial gestaffelten Heizleiter-Windungsabschnitten umfasst, und dass wenigstens ein Halteorgan in Zuordnung zu wenigstens zwei radial aufeinander folgenden Heizleiter-Windungsabschnitten jeweils einen Halteabschnitt und zwischen wenigstens zwei Halteabschnitten einen Befestigungsabschnitt aufweist.

Um eine übermäßige lokale Belastung des Heizleiters zu vermeiden, wird vorgeschlagen, dass wenigstens ein, vorzugsweise jeder Halteabschnitt eine an eine Außenumfangskontur des Heizbereichs angepasste Form aufweist. Beispielsweise kann vorgesehen sein, dass der Heizbereich eine kreisartige Außenumfangskontur aufweist, und dass wenigstens ein, vorzugsweise jeder Halteabschnitt in seinem den Heizbereich umgreifenden Längenabschnitt kreisartig gebogen ist.

Für eine über einen größeren Bereich ausgedehnte, stabile Festlegung am Träger kann in dem Träger eine Mehrzahl von radial aufeinanderfolgend angeordneten Befestigungsöffnungen vorgesehen sein, wobei wenigstens ein Halteorgan mit einer Mehrzahl von Befestigungsabschnitten in mehrere der radial aufeinanderfolgenden Befestigungsöffnungen eingreift. Weiter kann eine stabile Festlegung dadurch unterstützt werden, dass wenigstens ein Halteorgan sich im Wesentlichen radial erstreckend angeordnet ist. Hierzu kann beispielsweise an dem Träger eine Mehrzahl von vorzugsweise von radial innen nach radial außen sich erstreckenden Stegen ausgebildet sein. In wenigstens einem, vorzugsweise jedem Steg kann dabei eine Mehrzahl von Befestigungsöffnungen vorgesehen sein.

Der Träger kann für eine thermisch stabile Ausgestaltung als Metallscheibe ausgebildet sein. Wenigstens ein Halteorgan kann als Metallumformteil ausgebildet sein. Dies kann beispielsweise durch Biegen eines drahtartigen Rohlings aus Metallmaterial, wie zum Beispiel Federstahl oder dergleichen, in die für das Halteorgan vorzusehende, beispielsweise wellenartige Form erreicht werden.

Die Erfindung betrifft ferner eine Abgasanlage für eine Brennkraftmaschine eines Fahrzeugs mit einem erfindungsgemäß aufgebauten Abgasheizer.

Die vorliegende Erfindung wird nachfolgend mit Bezug auf die beiliegenden Figuren detailliert beschrieben. Es zeigt:
- Fig. 1: eine perspektivische Ansicht eines Abgasheizers für eine Abgasanlage einer Brennkraftmaschine;
- Fig. 2: eine perspektivische Detailansicht des Abgasheizers der Fig. 1 vor Anbringung eines Halteorgans an einem Träger des Abgasheizers;

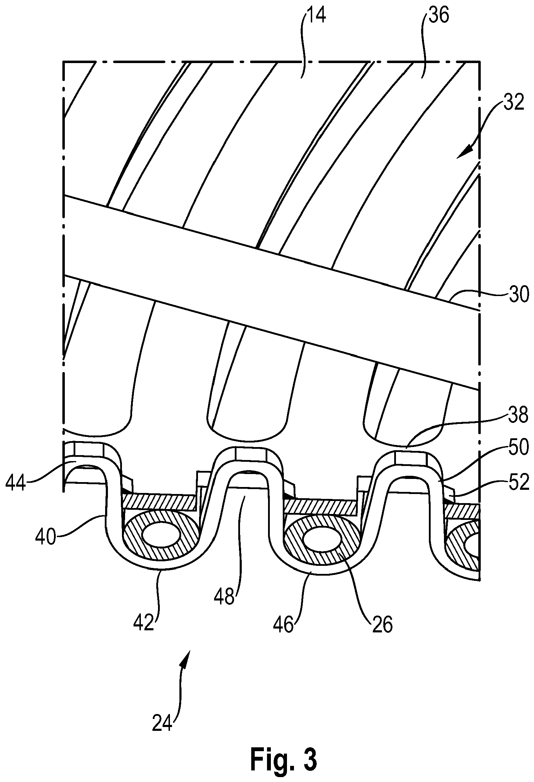

- Fig. 3: eine der Fig. 2 entsprechende Ansicht bei an dem Träger angebrachtem Halteorgan;

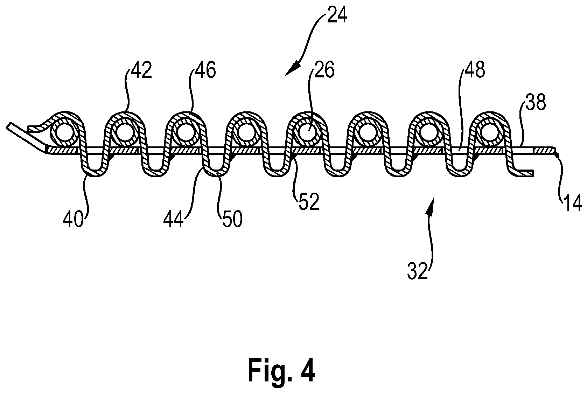

- Fig. 4: eine die Festlegung eines Heizleiters an einem Träger durch ein Halteorgan darstellende Schnittansicht.

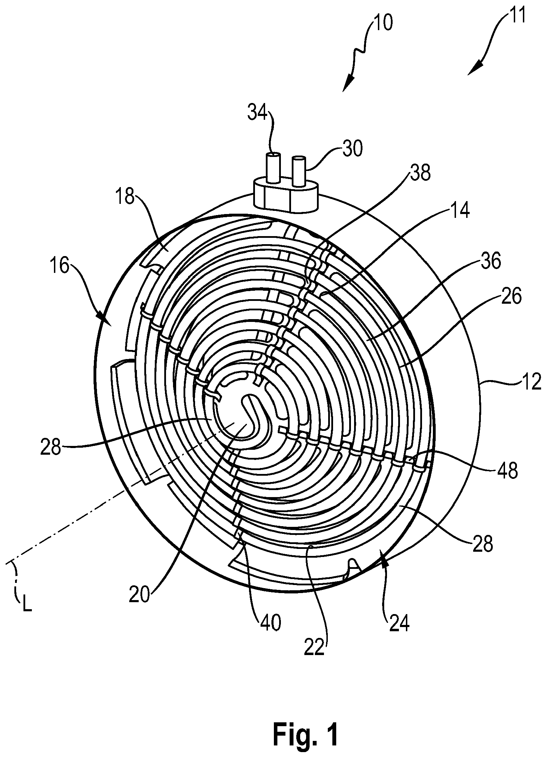

In Fig. 1 ist ein Abgasheizer für eine Abgasanlage 11 einer Brennkraftmaschine allgemein mit 10 bezeichnet. Der Abgasheizer 10 umfasst ein rohrartiges Gehäuse 12, welches einen Teilabschnitt eines Abgasrohrs der Abgasanlage 11 bereitstellen kann oder durch ein Abgasrohr der Abgasanlage 11 bereitgestellt sein kann. Im Inneren des Gehäuses 12 ist ein als Blechumformteil ausgebildeter, grundsätzlich scheibenartiger Träger 14 angeordnet. Der scheibenartige Träger 14 weist in einem bezüglich einer Heizer-Längsachse L radial außen angeordneten Außenumfangsbereich 16 eine Mehrzahl von axial abgebogenen Befestigungslaschen 18 auf, mit welchen dieser am Innenumfang des rohrartigen Gehäuses 12 beispielsweise durch Verschweißen festgelegt ist. Ein bezüglich der Heizer-Längsachse L radial innen bzw. zentral angeordneter Zentralbereich 20 ist vorzugsweise bezüglich des Außenumfangsbereichs 16 axial in Richtung stromaufwärts versetzt, so dass bei strömungstechnisch günstiger Ausgestaltung eine vergrößerte Heizwechselwirkungsfläche bereitgestellt werden kann.

An dem Träger 14 ist ein allgemein mit 22 bezeichneter Heizleiter festgelegt. Der Heizleiter 22 ist mit einem in einem Mantel angeordneten, durch Anlegen einer elektrischen Spannung erwärmbaren Heizdraht aufgebaut, wobei der den Heizdraht umgebende Mantel auch eine elektrische Isolation bezüglich des aus Metallmaterial aufgebauten Trägers 14 herstellt. An einer in Fig. 1 vorne liegend und in der Abgasanlage 11 in Richtung stromaufwärts orientierten ersten axialen Seite 24 des Trägers 14 ist ein spiralartig gewundener Heizbereich 26 des Heizleiters 22 angeordnet, so dass eine Mehrzahl von radial zueinander gestaffelt liegenden Windungsabschnitten 28 den Träger 14 an seiner ersten axialen Seite 24 überdecken. Im Zentralbereich 20 durchsetzt der radial innerste Windungsabschnitt 28 des Heizleiters 22 eine in dem Träger 14 vorgesehene Öffnung, so dass ein von radial innen nach radial außen sich erstreckender Verbindungsabschnitt 30 des Heizleiters 22 sich nach radial außen an einer zweiten axialen Seite 32 des Trägers 14 erstreckt und zusammen mit einem weiteren Verbindungsabschnitt 34, welcher an den radial äußersten Windungsabschnitt 28 des Heizbereichs 26 anschließt, durch das rohrartige Gehäuse 12 nach außen hervorsteht. In diesen Verbindungsabschnitte 30, 34 kann die elektrische Kontaktierung des Heizleiters 22 erfolgen. Die nach radial außen hervorstehenden Teile der Verbindungsabschnitte 30, 34 können durch bezüglich des rohrartigen Gehäuses 12 elektrisch isoliert gehaltene, separat ausgebildete und mit dem Heizleiter 22 elektrisch leitend verbundene Kontaktelemente bereitgestellt sein.

Um den Hindurchtritt von Abgas durch den Träger 14 zu ermöglichen, sind in diesem mehrere zueinander radial gestaffelte und in Umfangsrichtung aufeinanderfolgende Abgasdurchtrittsöffnungen 36 ausgebildet. Zwischen in Umfangsrichtung aufeinanderfolgenden Abgasdurchtrittsöffnungen 36 sind näherungsweise nach radial außen sich erstreckende Stege 38 gebildet. Im Bereich dieser Stege 38 ist der Heizleiter 22 an der ersten axialen Seite 24 des Trägers 14 jeweils durch ein im Wesentlichen radial sich erstreckendes Halteorgan 40 festgelegt. Im dargestellten Ausgestaltungsbeispiel sind insgesamt vier derartige Stege 38 und dementsprechend auch vier Halteorgane 40 in näherungsweise sternartiger Konfiguration vorgesehen. Es ist selbstverständlich, dass eine andere Anzahl an Stegen 38 vorgesehen sein kann und dass nicht notwendigerweise an jedem der Stege 38 die Festlegung des Heizleiters 22 am Träger 14 durch ein derartiges Halteorgan 40 realisiert sein muss.

Die beispielsweise aus Federstahldraht aufgebauten Halteorgane 40 sind grundsätzlich wellenartig ausgebildet und weisen alternierend erste Wellenbauchbereiche 42 und zweite Wellenbauchbereiche 44 auf. Mit den ersten Wellenbauchbereichen 42 umgreift ein jeweiliges Halteorgan 40 den Heizbereich 26 des Heizleiters 22 an dessen von der ersten axialen Seite 24 des Trägers 14 abgewandten Seite. Um einen über den Umfang gleichmäßigen Anlagekontakt zu erzeugen, sind die ersten Wellenbauchbereiche 42 an die Außenumfangskontur des Heizleiters 22 in seinem Heizbereich 26 angepasst. Dieser weist beispielsweise eine kreisförmige Außenumfangskontur auf, so dass die ersten Wellenbauchbereiche 42 entsprechend eine kreisartig gebogene Konfiguration aufweisen. Die ersten Wellenbauchbereiche 42 stellen jeweils Halteabschnitte 46 an einem jeweiligen Halteorgan 40 bereit.

In Zuordnung zu den zweiten Wellenbauchbereichen 44 sind in den Stegen 38 des Trägers 14 Befestigungsöffnungen 48 ausgebildet. Die jeweils einen Befestigungsabschnitt 50 bereitstellenden zweiten Wellenbauchbereiche 44 greifen jeweils in eine derartige Befestigungsöffnung 48 eine, vorzugsweise derart, dass die die Befestigungsabschnitte 50 bereitstellenden zweiten Wellenbauchbereiche 44 an der zweiten axialen Seite 32 des Trägers 14 hervorstehen. In diesen an der zweiten axialen Seite 32 hervorstehenden Befestigungsabschnitten 50 ist ein jeweiliges Halteorgan 40 durch Materialschluss, insbesondere durch Verschweißungen 52, am Träger 14 festgelegt, so dass eine gegen dynamische mechanische Belastungen und auch thermische Belastungen stabile Befestigung der Halteorgane 40 am Träger 14 realisiert ist. Dabei ist eine derartige Verschweißung 52 vorzugsweise bei jedem Befestigungsabschnitt 50 realisiert. Grundsätzlich könnte auch nur bei einem Teil der Befestigungsabschnitte 50, beispielsweise bei jedem zweiten Befestigungsabschnitt 50, eine Festlegung auf diese Art und Weise erfolgen.

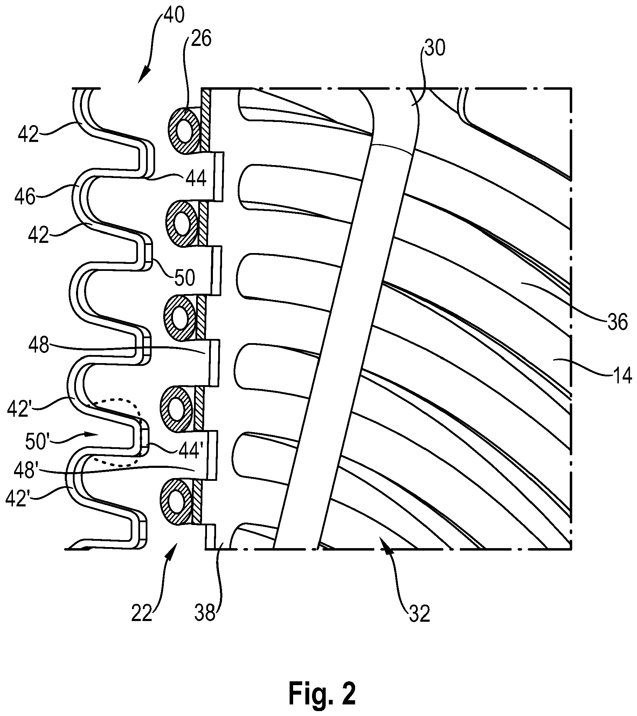

Eine nicht erfindungsgemäße Ausgestaltungsart ist in Fig. 2 im Zusammenhang mit einem Befestigungsabschnitt 50' dargestellt. Wie durch Strichlinie angedeutet, könnte der diesen Befestigungsabschnitt 50' bereitstellende zweite Wellenbauchbereich 44', ausgehend von seinem Anschluss an die benachbarten ersten Wellenbauchbereiche 42', sich zunächst in der Ausdehnungsrichtung des Halteorgans 40 erweitern, also mit beispielsweise Omega-förmiger Struktur ausgebildet sein. Beim Hindurchführen des zweiten Wellenbauchbereichs 44' durch eine zugeordnete Befestigungsöffnung 48' wird der zweite Wellenbauchbereich 44' zunächst komprimiert. Nach dem vollständigen Einführen in die zugeordnete Befestigungsöffnung 48' federt der zweite Wellenbauchbereich 44' wieder auseinander, so dass er den Träger 14 an der zweiten axialen Seite 32 hintergreift und auf diese Art und Weise eine formschlüssige Befestigung für das Halteorgan 40 realisiert.

Eine derartige formschlüssige Befestigungswirkung könnte bei allen oder bei einem Teil der an einem der Halteorgane vorgesehenen Befestigungsabschnitte realisiert sein. Grundsätzlich kann die formschlüssige Befestigungswirkung aufgrund der Formgebung der Befestigungsabschnitte auch kombiniert werden mit der erfindungsgemäß vorgesehenen materialschlüssigen Verbindung, also dem Bereitstellen einer oder ggf. auch zweier Verschweißungen eines jeweiligen Befestigungsabschnitts am Träger.

Mit den zur Festlegung des Heizleiters eingesetzten Halteorganen wird eine einfache, gleichwohl stabil wirkende und gegen thermische und mechanische Belastungen resistente Befestigungswirkung erzielt. Diese ist daher besonders stabil, da die Halteorgane im Bereich der am Träger vorgesehenen, sich im Wesentlichen radial erstreckenden Stege vorgesehen sind. Bei einer alternativen Ausgestaltung könnten derartige Halteorgane auch an anderen Umfangsbereichen des Trägers mit diesem zusammenwirken und beispielsweise in die Abgasdurchtrittsöffnungen eingreifend positioniert werden. Auch können bei alternativen Ausgestaltungen die Halteorgane so ausgebildet sein, dass sie sich nur über einen Teilbereich der radialen Erstreckung des Heizbereichs des Heizleiters über diesen hinweg erstrecken, wobei dann in Umfangsrichtung verteilt positionierte Halteorgane verschiedene radiale Bereiche des Heizbereichs am Träger festlegen können.

## Patentansprüche

1. Abgasheizer für eine Abgasanlage einer Brennkraftmaschine, umfassend:
- einen scheibenartigen Träger (14) mit einem bezüglich einer Heizer-Längsachse (L) radial außen angeordneten Außenumfangsbereich (16) und einem radial innen angeordneten Zentralbereich (20),
- einen Heizleiter (22) mit einem an einer ersten axialen Seite (24) des Trägers (14) angeordneten Heizbereich (26),
- wenigstens ein Halteorgan (40) zum Halten des Heizleiters (22) an dem Träger (14),
wobei das Halteorgan (40) eine Mehrzahl von alternierend aufeinanderfolgenden, den Heizleiter (22) in seinem Heizbereich (26) umgreifenden Halteabschnitten (46) und in Befestigungsöffnungen (48) in dem Träger (14) eingreifenden und an dem Träger (14) festgelegten Befestigungsabschnitten (50) umfasst, wobei das wenigstens eine Halteorgan (40) wellenartig ausgebildet ist mit alternierend aufeinanderfolgenden ersten Wellenbauchbereichen (42) und zweiten Wellenbauchbereichen (44), wobei die ersten Wellenbauchbereiche (42) die Halteabschnitte (46) bilden und die zweiten Wellenbauchbereiche (44) die Befestigungsabschnitte (50) bilden, **dadurch gekennzeichnet, dass** das Halteorgan (40) mit wenigstens einem Befestigungsabschnitt (50) an einer zweiten axialen Seite (32) des Trägers (14) durch Materialschluss an dem Träger (14) festgelegt ist, dass wenigstens ein in eine Befestigungsöffnung (48) des Trägers (14) eingreifender zweiter Wellenbauchbereich (44) in seinem an der zweiten axialen Seite (32) des Trägers (14) hervorstehenden Längenabschnitt durch Materialschluss an dem Träger (14) festgelegt ist.

2. Abgasheizer nach Anspruch 1, **dadurch gekennzeichnet, dass** der Heizleiter (22) in seinem Heizbereich (26) spiralartig gewunden ist und eine Mehrzahl von zueinander radial gestaffelten Heizleiter-Windungsabschnitten (28) umfasst, und dass wenigstens ein Halteorgan (40) in Zuordnung zu wenigstens zwei radial aufeinanderfolgenden Heizleiter-Windungsabschnitten (28) jeweils einen Halteabschnitt (46) und zwischen wenigstens zwei Halteabschnitten (46) einen Befestigungsabschnitt (50) aufweist.

3. Abgasheizer nach einem der vorangehenden Ansprüche, **dadurch gekennzeichnet, dass** wenigstens ein, vorzugsweise jeder Halteabschnitt (46) eine an eine Außenumfangskontur des Heizbereichs (26) angepasste Form aufweist.

4. Abgasheizer nach Anspruch 3, **dadurch gekennzeichnet, dass** der Heizbereich (26) eine kreisartige Außenumfangskontur aufweist, und dass wenigstens ein, vorzugsweise jeder Halteabschnitt (46) in seinem den Heizbereich (26) umgreifenden Längenabschnitt kreisartig gebogen ist.

5. Abgasheizer nach einem der vorangehenden Ansprüche, **dadurch gekennzeichnet, dass** das Halteorgan (40) mit wenigstens einem Befestigungsabschnitt (50) an einer zweiten axialen Seite (32) des Trägers (14) durch Verschweißen an dem Träger (14) festgelegt ist.

6. Abgasheizer nach einem der vorangehenden Ansprüche, **dadurch gekennzeichnet, dass** in dem Träger (14) eine Mehrzahl von radial aufeinanderfolgend angeordneten Befestigungsöffnungen (48) vorgesehen ist, wobei wenigstens ein Halteorgan (40) mit einer Mehrzahl von Befestigungsabschnitten (46) in mehrere der radial aufeinanderfolgenden Befestigungsöffnungen (48) eingreift, oder/und dass wenigstens ein Halteorgan (40) sich im Wesentlichen radial erstreckend angeordnet ist.

7. Abgasheizer nach einem der vorangehenden Ansprüche, **dadurch gekennzeichnet, dass** an dem Träger (14) eine Mehrzahl von vorzugsweise von radial innen nach radial außen sich erstreckenden Stegen (38) ausgebildet ist, und dass in wenigstens einem, vorzugsweise jedem Steg (38) eine Mehrzahl von Befestigungsöffnungen (48) vorgesehen ist.

8. Abgasheizer nach einem der vorangehenden Ansprüche, **dadurch gekennzeichnet, dass** der Träger (14) als Metallscheibe ausgebildet ist, oder/und dass wenigstens ein Halteorgan (40) als Metallumformteil ausgebildet ist.

9. Abgasanlage für eine Brennkraftmaschine eines Fahrzeugs, umfassend einen Abgasheizer (10) einem der vorangehenden Ansprüche.

## Claims

1. An exhaust gas heater for an exhaust gas system of an internal combustion engine, comprising:
- a disc-like carrier (14) having an outer circumferential region (16), which is arranged radially on the outside with respect to a heater longitudinal axis (L) and a central region (20), which is arranged radially on the inside,
- a heating conductor (22) with a heating region (26) arranged on a first axial side (24) of the carrier (14),
- at least one holding member (40) for holding the heating conductor (22) on the carrier (14),
wherein the holding member (40) comprises a plurality of alternatingly successive holding portions (46) which engage around the heating conductor (22) in its heating region (26) and fastening portions (50) which engage into fastening openings (48) in the carrier (14) and fixed to the carrier (14), wherein the at least one holding member (40) is of wave-like form with successive alternating first wave loop regions (42) and second wave loop regions (44), wherein the first wave loop regions (42) form the holding portions (46) and the second wave loop regions (44) form the fastening portions (50), **characterized in that** at least one holding member (40) is fixed to the carrier (14) with at least one fastening portion (50) on a second axial side (32) of the carrier (14) by material bonding, that at least one second wave loop region (44) engaging into a fastening opening (48) of the carrier (14) is fixed to the carrier (14) by material bonding in its length portion protruding from the second axial side (32) of the carrier (14).

2. The exhaust gas heater according to claim 1, **characterized in that** the heating conductor (22) is spirally wound in its heating region (26) and comprises a plurality of heating conductor winding portions (28) which are radially staggered relative to one another, and that at least one holding member (40) has one respective holding portion (46) in association with at least two radially successive heating conductor winding portions (28) and, between at least two holding portions (46), a fastening portion (50).

3. The exhaust gas heater according to one of the preceding claims, **characterized in that** at least one, preferably each, holding portion (46) has a shape adapted to an outer circumferential contour of the heating region (26).

4. The exhaust gas heater according to claim 3, **characterized in that** the heating region (26) has a circular outer circumferential contour, and that at least one, preferably each, holding portion (46) is curved in a circular manner in its longitudinal section encompassing the heating region (26).

5. The exhaust gas heater according to one of the preceding claims, **characterized in that** the holding member (40) is fixed to the carrier (14) with at least one fastening portion (50) on a second axial side (32) of the carrier (14) by welding.

6. The exhaust gas heater according to one of the preceding claims, **characterized in that** a plurality of fastening openings (48) arranged radially in succession is provided in the carrier (14), wherein at least one holding member (40) engages with a plurality of fastening portions (46) into a plurality of the radially successive fastening openings (48), or/and that at least one holding member (40) is arranged so as to extend substantially radially.

7. The exhaust gas heater according to one of the preceding claims, **characterized in that** there is formed on the carrier (14) a plurality of webs (38) which extend preferably from radially on the inside to radially on the outside, and that a plurality of fastening openings (48) is provided in at least one, preferably each, web (38).

8. The exhaust gas heater according to one of the preceding claims, **characterized in that** the carrier (14) is in the form of a metal disk, or/and that at least one holding member (40) is in the form of a shaped metal part.

9. An exhaust gas system for a combustion engine of a vehicle, comprising an exhaust gas heater (10) according to one of the preceding claims.

## Revendications

1. Dispositif de chauffage de gaz d'échappement pour un système d'échappement d'un moteur à combustion interne, comprenant :
- un support (14) en forme de disque avec une zone périphérique extérieure (16) disposée radialement à l'extérieur par rapport à un axe longitudinal (L) du dispositif de chauffage et une zone centrale (20) disposée radialement à l'intérieur,
- un conducteur chauffant (22) avec une zone de chauffage (26) disposée sur un premier côté axial (24) du support (14),
- au moins un élément de maintien (40) pour maintenir le conducteur chauffant (22) sur le support (14),
dans lequel élément de maintien (40) comprend une pluralité de sections de maintient (46) se succédant en alternance, entourant le conducteur chauffant (22) dans sa zone de chauffage (26) et des sections de fixation (50) s'engageant dans des ouvertures de fixation (48) dans le support (14) et fixées au support (14), dans lequel ledit au moins un élément de maintien (40) est réalisé en forme de vagues avec des premières zones de ventre de vague (42) et des deuxièmes zones de ventre de vague (44) se succédant en alternance, dans lequel les premières zones de ventre de vague (42) forment les sections de maintien (46) et les deuxièmes zones de ventre de vague (44) forment les sections de fixation (50), **caractérisé en ce que** l'élément de maintien (40) est fixé par au moins une section de fixation (50) sur un deuxième côté axial (32) du support (14) par assemblage de matériau sur le support (14), **en ce qu'**au moins une deuxième zone de ventre de vague (44) s'engageant dans une ouverture de fixation (48) du support (14) est fixée sur le support (14) par assemblage de matériau dans sa section longitudinale faisant saillie sur le deuxième côté axial (32) du support (14).

2. Dispositif de chauffage de gaz d'échappement selon la revendication 1, **caractérisé en ce que** le conducteur chauffant (22) est enroulé en spirale dans sa zone de chauffage (26) et comprend une pluralité de sections d'enroulement de conducteur chauffant (28) échelonnées radialement les unes par rapport aux autres, et **en ce qu'**au moins un élément de maintien (40) présente respectivement une section de maintien (46) en association avec au moins deux sections d'enroulement de conducteur chauffant successives radialement et une section de fixation (50) entre au moins deux sections de maintien (46).

3. Dispositif de chauffage de gaz d'échappement selon l'une des revendications précédentes, **caractérisé en ce qu'**au moins une, de préférence chaque section de maintien (46) présente une forme adaptée à un contour périphérique extérieur de la zone de chauffage (26).

4. Dispositif de chauffage de gaz d'échappement selon la revendication 3, **caractérisé en ce que** la zone de chauffage (26) présente un contour périphérique extérieur circulaire, et **en ce qu'**au moins une, de préférence chaque section de maintien (46) est courbée de manière circulaire dans sa section longitudinale entourant la zone de chauffage (26).

5. Dispositif de chauffage de gaz d'échappement selon l'une des revendications précédentes, **caractérisé en ce que** l'élément de maintien (40) est fixé par au moins une section de fixation (50) sur un deuxième côté axial (32) du support (14) par soudage sur le support (14).

6. Dispositif de chauffage de gaz d'échappement selon l'une des revendications précédentes, **caractérisé en ce qu'**il est prévu dans le support (14) une pluralité d'ouvertures de fixation (48) disposées radialement les unes à la suite des autres, dans lequel au moins un élément de maintien (40) s'engage par une pluralité de sections de fixation (46) dans plusieurs des ouvertures de fixation (48) radialement successives, ou/et **en ce qu'**au moins un élément de maintien (40) est disposé de manière à s'étendre essentiellement radialement.

7. Dispositif de chauffage de gaz d'échappement selon l'une des revendications précédentes, **caractérisé en ce qu'**une pluralité de nervures (38) s'étendant de préférence radialement de l'intérieur vers l'extérieur est formée sur le support (14), et **en ce qu'**une pluralité d'ouvertures de fixation (48) est prévue dans au moins une, de préférence chaque nervure (38).

8. Dispositif de chauffage de gaz d'échappement selon l'une des revendications précédentes, **caractérisé en ce que** le support (14) est réalisé sous forme de disque métallique, ou/et **en ce qu'**au moins un élément de maintien (40) est réalisé sous forme de pièce métallique déformée.

9. Système d'échappement pour un moteur à combustion interne d'un véhicule, comprenant un dispositif de chauffage de gaz d'échappement (10) selon l'une des revendications précédentes.
